# EUROPÄISCHE PATENTSCHRIFT

(11) **EP 0 419 931 B1**
(45) Veröffentlichungstag und Bekanntmachung des Hinweises auf die Patenterteilung: **24.04.1996**
(21) Anmeldenummer: 90117462.3
(22) Anmeldetag: 11.09.1990
(51) Int. Cl.: B01D 25/164, B01D 25/168, B01D 35/18

(54) **Plattenfilterpresse**
Plate filter press
Presse filtrante à plaques

(30) Priorität: 28.09.1989 DE 3932422
(43) Veröffentlichungstag der Anmeldung: 03.04.1991
(73) Patentinhaber: KRUPP MASCHINENTECHNIK GESELLSCHAFT MIT BESCHRÄNKTER HAFTUNG, D-45143 Essen (DE)
(72) Erfinder: Stöver, Hans-Martin, Dipl.-Ing., D-2110 Buchholz (DE); Suhr, Günther, Dipl.-Ing., D-2105 Seevetal 3 (DE); Willner, Thomas, Dipl.-Ing., D-2100 Hamburg 90 (DE)

(56) Entgegenhaltungen:
- EP-A- 0 149 821
- EP-A- 0 207 555
- EP-A- 0 232 735
- FR-A- 2 623 420
- GB-A- 2 176 418

## Beschreibung

Die Erfindung betrifft eine Plattenfilterpresse, die als rahmenlose Kammerfilterpresse ausgebildet ist, zur mechanischen Fest-Flüssig-Trennung von Suspensionen, zur Entölung, Entwässerung oder dergleichen mit mehreren abwechselnd hintereinander angeordneten senkrechten Filter- und Membranplatten, die jeweils zwischen sich eine durch Auseinanderfahren der Platten entleerbare Filterkammer bestehend aus einer Druckmediums- und einer Suspensionskammer mit einer dazwischenliegenden undurchlässigen und flexiblen Membran einschließen, wobei die Filterplatten beidseitig mit einem Filter belegt sind und der Abfluß zum Platteninnern erfolgt.

Solche Filterpressen werden eingesetzt bei der Auftrennung von kristallisierten Fettsuspensionen, der mechanischen Entölung von Parrafin- und Naphthalinsuspensionen, der mechanischen Trocknung von Schlämmen, der mechanischen Lösungsmittelabtrennung aus chemischen oder pharmazeutischen Suspensionen und anderen Trennvorgängen. Nicht möglich ist dabei die Kombination von mechanischer und thermischer Trennung in derselben Apparatur zwecks Vervollständigung der Phasentrennung bei gleichzeitiger Möglichkeit der thermischen Reinigung des Filtermediums im entleerten Zustand der Apparatur. Ferner mangelt es an einfachen Möglichkeiten, die Suspension während des Betriebes innerhalb der Presse zu temperieren, nämlich wahlweise zu erhitzen und/oder zu kühlen. Darüber hinaus genügen in vielen Fällen die erreichbaren Preßdrücke nicht, um eine ausreichende mechanische Vortrennung zu gewährleisten.

Die zum Einsatz kommenden Plattenfilterpressen nach dem Rahmen- oder Kammerfilterprinzip bestehen aus mehreren hintereinander angeordneten Filterplatten, mit Filterkammern in denen eine Suspension gefiltert wird. Der erhöhte Druck wird gewöhnlich aufgebracht durch Druckluft, welche durch eine undurchlässige flexible Membran, z.B. eine Gummimembran von der Suspension getrennt ist. Die Verwendung von Druckluft hat den Nachteil, daß erstens bei großen Pressen und höheren Drücken erhebliche Druck-Liter-Produkte erreicht werden, die ein hohes Gefahrenpotential darstellen und zweitens Druckluft als Wärmeträgermedium für Temperierzwecke ungeeignet ist.

Ein weiterer Nachteil bekannter Plattenfilterpressen ist, daß sie in der Regel nicht in entleertem Zustand betrieben werden dürfen, da sonst die Gefahr der Membranzerstörung besteht.

Die Membranen dienen in vielen Fällen als Dichtung der Kammern gegenüber der Umgebung. Dabei müssen die Membranen die gesamte Plattenschließkraft aufnehmen, welche oft zu weit höherer Flächenbelastung für die Membranen führt, als der Preßdruck innerhalb der Kammern. Dadurch wird ungünstigerweise der maximal zulässige Betriebsdruck von Plattenfilterpressen in der Regel auf weniger als 20 bar beschränkt.

Suspensionszulauf und insbesondere bei Kammerfilterpressen auch Filtratablauf werden häufig durch die Membran hindurchgeführt, was insbesondere bei erhöhten Drücken häufig Dichtungsprobleme zur Folge hat und was Spannungsspitzen in der Membran bewirkt.

Bei üblichen Kammerfilterpressen wird die Filterkammer allseitig von Membranen umgeben. In diesem Falle muß die Membran als Filtertuchstütze dienen. Dabei sorgt eine genoppte Oberflächenausprägung auf der Membran für die Ablaufmöglichkeit des Oleins parallel zur Filterfläche. Derartige Membranen haben den Nachteil, daß sie nur Drücken von maximal etwa 16 bar standhalten. Bei höheren Drücken werden die Noppen so stark zusammengedrückt, daß die Ablaufkanäle des Oleins verstopfen. Außerdem haben Membranen wärmeisolierende Wirkung und sind somit als Wärmeübertrager ungeeignet. Weiter werden durch derartige Oberflächenausprägungen auf der Membran Spannungsspi tzen verursacht, welche zu erhöhter Verschleißanfälligkeit führen. Zuätzliche Spannungsspitzen in der Membran im Betrieb treten infolge der üblicherweise nicht gleichmäßig runden Ausführung der Platten auf.

Ein anderer Nachteil konventioneller Kammerfilterpressen ist, daß die Preßkuchen beidseitig unregelmäßig, konvex oder konkav geformt sind, was in allen Fällen nach dem Auseinanderfahren der Kammern ein erschwertes Kuchenablöse- und -abrutschverhalten zur Folge hat, verglichen mit einer vollständig ebenen Oberflächenform.

Bei konventionellen Kammerfilterpressen können als Filtermedium wegen zu geringer Flexibilität keine metallischen Gewebe sondern nur textile Filtertücher verwendet werden. Filtertücher haben aber gegenüber Metallgeweben gleicher Porengröße die Nachteile erstens größerer Porengrößenschwankung und damit geringerer Trennselektivität hinsichtlich der Kristallgröße, zweitens höheren Strömungswiderstandes und damit längerer Preßzeiten, drittens schwierigerer Reinigung und viertens schlechteren Kuchenablöseverhaltens.

Rahmenfilterpressen haben gegenüber Kammerfilterpressen den erheblichen Nachteil, daß der Preßkuchen nach dem Auseinanderfahren der Filter- und Membranplatten jeweils in dem festen Kammerrahmen hängen bleibt und nicht ohne weiteres herunterfällt.

Filterpressen, die erhöhte Drücke bis über 100 bar erreichen, sind ebenfalls bekannt, ausgeführt entweder als Mehrkammertopfpressen nach dem Prinzip einer Kakaobutterpresse oder als Röhrenfilterpresse. Die Mehrkammertopfpressen haben die Nachteile, daß sie erstens vergleichsweise sehr materialaufwendig sind, zweitens eine komplizierte Vorrichtung zur Freigabe des Kuchens nach der Pressung erfordern und drittens infolge einer Vielzahl von ineinander geführten gegenseitig verschiebbaren und gleichzeitig dichtenden metallischen Bauteilen sehr hohe Anforderungen an die Fertigungstoleranzen stellen. Dadurch sind Mehrkammertopfpressen sehr schwer und teuer.

Röhrenfilterpressen, wie z.B. nach der GB-A-907.485, haben den Nachteil, daß der Preßkuchen nach beendetem Preßvorgang in geschlossener zylindrischer Form am Filtermedium haftend vorliegt und nicht ohne mechanische Zerstörung der Kuchenform aus der Presse befördert werden kann.
Beim Kuchenaustrag können erhebliche Schwierigkeiten auftreten, wenn Kuchenbruchstücke am Filtermedium haften bleiben oder sich herabfallende Kuchenbruchstücke im Röhrenringspalt verkanten. Darüberhinaus erfordert die Reinigung von Membran und Filtermedium wegen ihrer Unzugänglichkeit die Zerlegung der Apparatur.

Der vorliegenden Erfindung liegt daher die Aufgabe zugrunde, eine Filterpresse zu schaffen, die für Preßdrücke von mindestens 25 bar bis etwa 120 bar geeignet ist, die gleichzeitig die Funktionen der mechanischen Phasentrennung, der Suspensionstemperierung, und zwar sowohl Erhitzung als auch Kühlung,und der thermischen Reinigung der Suspensionskammer und des Filtermediums ausführen kann, dies unter Vermeidung der oben dargelegten Nachteile der bekannten Filterpressen.

Zur Lösung dieser Aufgabe wird bei einer Presse der eingangs beschriebenen Art vorgeschlagen, daß das Filter in Form eines metallischen Drahtgewebes ausgeführt ist, daß die Filterplatten so gestaltet sind, daß die Oberfläche der belegten Filterplatte durchgehend eben ist, daß die Filter- und die Membranplatten sowie die Membranen kreisrund ausgebildet sind, daß die Platten über unmittelbar zwischenliegende, auf den Membranplatten befestigte Klemmringe insgesamt miteinander verspannbar sind und daß die Membranen an ihrem äußeren Rand in entsprechend geformte Rücksprünge in den Membranplatten eingelegt, dort durch die Klemmringe dichtend gehalten und am radial inneren Rand der Klemmringe bis auf die Ebene der der benachbarten Filterplatte zugewandten Fläche der Klemmringe geführt sind. Dadurch ergibt sich eine recht einfache und sichere Entleerung der Filterkammern nach dem Preßvorgang. Beim Auseinanderfahren der Platten kommt der Filterkuchen sofort vom Filter frei und kann - ggf. unter kurzzeitigem Eingeben von Druckflüssigkeit in die Druckmediumskammern - unbehindert nach unten fallen und abtransportiert werden. Das Filter kann ohne Rücksicht auf Zerreißfestigkeit und Flexibilität ausschließlich auf die günstigste Filterwirkung ausgelegt werden.

Das Auftreten von Spannungsspitzen in den Membranen wird weitestgehend vermieden. Insbesondere wird durch die unmittelbare Zwischenschaltung der Klemmringe zwischen Filter- und Membranplatten und die gleichzeitige Überdeckung des nach innen anschließenden Teils der Klemmringe über den Membranrand in den Rücksprüngen eine klare Trennung des Kraftangriffs der Plattenschließkräfte, nämlich ausschließlich über die Filter- und die Membranplatten und die Klemmringe, vom Kraftangriff der Einspannkräfte am Membranrand über den inneren Klemmringteil und die Rücksprünge erreicht. Beide Kräfte sind so unabhängig voneinander, jeweils optimal einstellbar. Die Führung der Membranen von der Einspannstelle nach innen bis auf die Höhe der Filterplatten verhindert Spannungsspitzen in diesem kritischen Bereich auch im letzten Stadium eines jeden Preßvorganges und bei formschlüssigem Andrücken der Membranen an die Filterplatten in entleertem Zustand der Suspensionskammer. Die Materialeigenschaften der Membranen lassen sich damit insgesamt höher nutzen.

Aus EP-A-0207555 ist eine solche Ausgestaltung nicht abzuleiten, da dort eine Rahmenfilterpresse beschrieben ist, bei der Kammerausformung und Suspensionszulauf bereits ohne weiteres von der Rahmenplatte erfüllt werden, so daß insoweit Anregungen zur Lösung der bei einer rahmenlosen Presse auftretenden Gestaltungsaufgaben wie sie die Erfindung angibt, nicht zu entnehmen sind.

Die über die vor allem nicht durchgehend ebene Form der Filterplatten und die nicht über unmittelbar zwischenliegende Klemmringe verspannbaren Filter- und Membranplatten nach EP-A-0232735 hinausgehenden Konstruktionsmerkmale des Filtermaterials, der Form der Membran- und Filterplatten sowie deren Halterung und Abstützung finden insbesondere in ihrer erfindungsgemäßen Verbindung in dieser Veröffentlichung keinerlei Anhalt oder Vorbild.

Zweckmäßig ist die Höhe der Rücksprünge so bemessen und erforderlichenfalls beispielsweise durch Beilagescheiben einstellbar, daß bei auf den Membranplatten fest aufliegenden Klemmringen deren die Rücksprünge überdeckenden Teil die Membranen dort mit der für den Filterbetrieb günstigsten Kraft verspannt. Mit dieser Ausbildung lassen sich ohne Konstruktionsänderung die Membranplatten auf praktisch jede Membrandicke und jede Einspannkraft einstellen.

Außerdem empfiehlt es sich, die Membranen glatt und elastisch zu wählen und derart vorzuformen, daß ihre Form der Einspannung am Rand der Membranplatte entspricht und innen etwa zur halben Höhe des Abstandes zwischen Filterplatte und Membranplatte der dort gebildeten Filterkammern einspringt. Damit wird eine weitere Vergleichmäßigung der Beanspruchung der Membranen über den gesamten Filtervorgang erreicht, so daß wiederum höhere Preßdrücke beherrscht werden können.

Darüber hinaus wird vorgeschlagen, daß die Filterkammern durch je zwei jeweils den benachbarten Filterplatten zugewandte, durch eine Mittelwand voneinander getrennte Ausnehmungen in den Membranplatten gebildet sind, die sich auf ihrem Umfang zur Mittelwand hin verengen. Diese Form nutzt das Volumen der Membranplatten aus, begünstigt gleichzeitig die gleichmäßige Membranbelastung und ermöglicht sehr einfach die Druckmediumsführung zu den beiden Druckmediumskammern von oben durch die Plattenmitte und die Abführung nach unten ebenfalls durch die Plattenmitte, d. h. in der Ebene der Mittelwand.

Für einen besonders günstigen auch thermischen Ablauf des Preßvorganges soll der Fluß des Druckmediums zu den Filterkammern über die Membranplatten und von diesen zurück im Kreislauf über eine Umlaufpumpe und mindestens einen Wärmetauscher geführt werden, der zur Erwärmung oder Kühlung des Druckmediums und - über im wesentlichen die Membranen - auch des Filtergutes dient, wobei der Druck des Druckmediums durch eine außen an den Kreislauf angeschlossene Versorgungspumpe auf die für den Filterbetrieb erforderlichen Drücke einstellbar ist. Dabei wird wahlweise eine derartige Druckeinstellmöglichkeit für die Versorgungspumpe vorgesehen, daß jeweils nach dem Entleeren der Filterkammern und vor dem Neubeschicken der Suspensionskammern die Membranen durch Einleiten erhitzten Druckmediums unter geringem Druck in die Druckmediumskammern formschlüssig an die Filter anlegbar sind. Dadurch ist mit geringstem Aufwand eine sehr wirksame einstellbare Temperierung der jeweils in Betracht kommenden Bereiche während der einzelnen Teilschritte der Filterung möglich. Die Versorgungspumpe hält in Abstimmung mit der erforderlichen Temperierung das Druckmedium auf dem jeweils günstigsten Niveau, beispielsweise nach dem Einfüllen einer neuen Suspensionspartie zunehmend bis zum vollen Preßdruck, der sich auf mindestens 25 bar und auf bis zu etwa 120 bar belaufen kann, nach dem Preßvorgang auf dem Umgebungsdruck, damit beim Öffnen der Presse die Filterkammer sich entleert, während der Entleerung erforderlichenfalls auf geringem Druck, damit die Membran den Filterkuchen abdrückt, nach der Entleerung und dem Schließen der Presse auf wiederum leicht erhöhtem Druck, damit durch formschlüssige Anlage der Membran am Filter infolge der Wärmezufuhr Filterkuchenreste auf dem Filter, beispielsweise kristalline Fettpartikel aufgeschmolzen und das Filter gereinigt werden kann und anschließend wieder auf dem Umgebungsdruck, um die nächste Suspensionspartie einfüllen zu können.

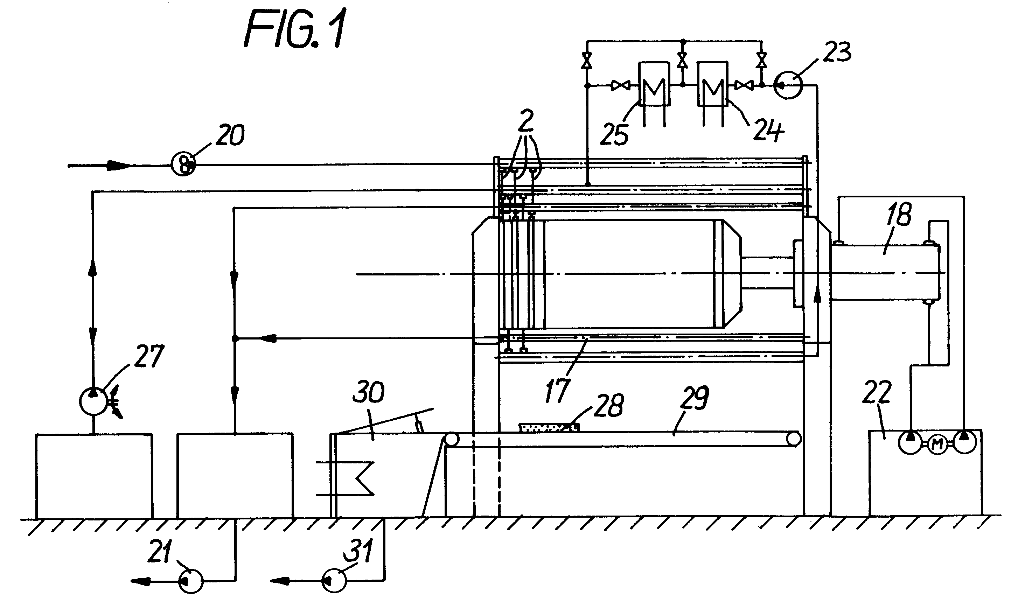

In der Zeichnung ist ein Ausführungsbeispel einer erfindungsgemäßen Plattenfilterpresse dargestellt und zwar in
- Fig. 1: in Gesamtansicht einer Presse, in

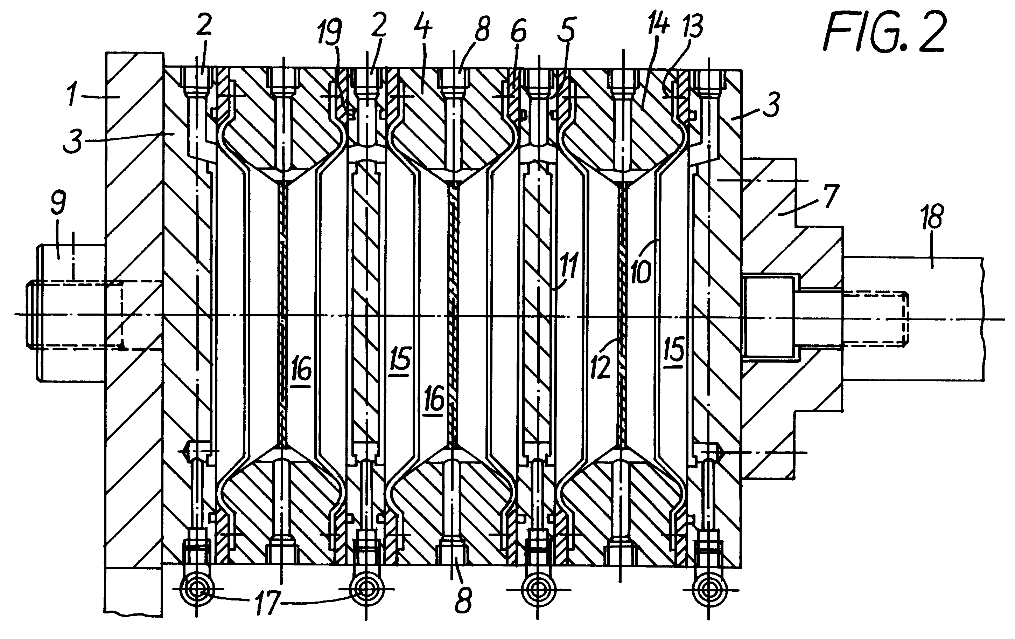

- Fig. 2: im Längsschnitt durch das Filterpaket, in

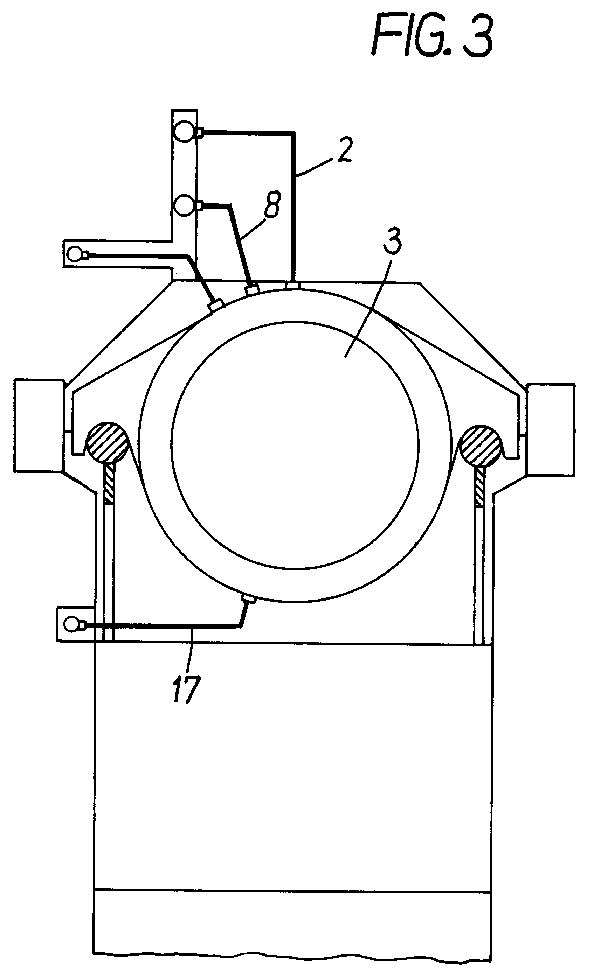

- Fig. 3: in Stirnansicht auf das Filterpaket und in
- Fig. 4: im Schnitt durch die Einspannstelle einer Membran, vergrößert.

Die Presse umfaßt mehrere abwechselnd hintereinander angeordnete Filterplatten 5 und Membranplatten 14, welche zwecks besserer Materialausnutzung jeweils nach beiden Seiten hin wirksam sind.

Die zu behandelnde Suspension wird über eine Suspensionspumpe 20 und Suspensionszuläufe 2 in die Suspensionskammern 15 der Membranplatten 14 gefüllt und anschließend durch Erhöhung des Druckes in Druckmediumskammern 16, die mit Druckflüssigkeit, z.B. auf wässriger Basis gefüllt sind, zusammengepreßt. Das ausgepreßte Filtrat, z.B. Olein fließt über das Filter 11, welches als metallisches Gewebe unter Minimierung des Strömungswiderstandes ausgebildet ist, in die Filterplatte 5, wird über Ablaufkanäle nach unten geführt und über den Filtratablauf 17 und eine Filtratpumpe 21 ausgeleitet.

Das Plattenpaket wird beidseitig begrenzt von je einer Endfilterplatte 3, in welche durch eine Kopfplatte 1 und eine Stirnplatte 7 mittels eines z.B. über eine Hydraulikversorgung 22 hydraulisch betriebenen Stempels 18 und eines Widerlagers 9 die Plattenschließkräfte eingeleitet werden.

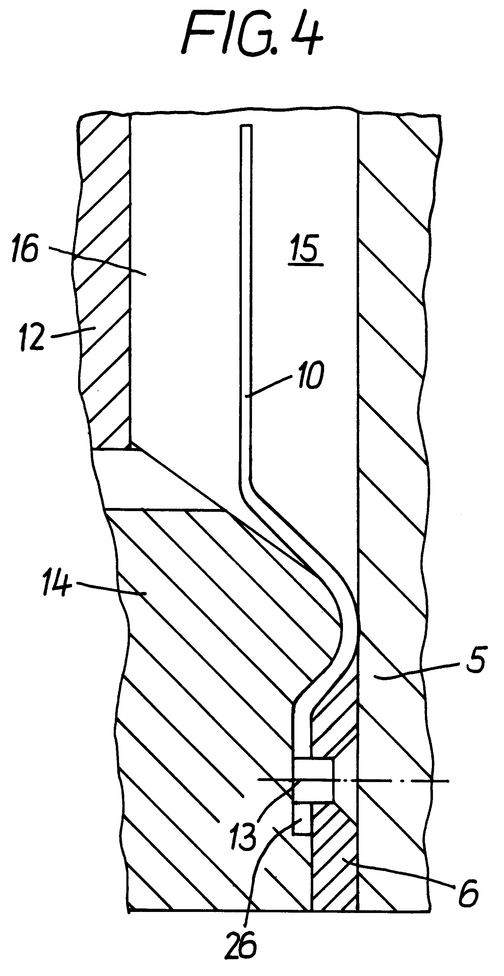

Zur Vermeidung von Spannungsspitzen in der die Suspensionskammern 15 von den Druckmediumskammern 16 trennenden Membran 10 sind die Kammern gleichmäßig rund geformt. Die Plattenschließkräfte werden nicht in die Membran 10 geleitet, sondern direkt von Platte zu Platte übertragen durch kraftschlüssige gegenseitige Berührung unter unmittelbarer Zwischenschaltung von Klemmringen. Die Aufgabe der Dichtung der Kammern nach außen wird von separaten Dichtungen 19 und durch eine Einspannung der Membran 10 durch den Klemmring 6 erfüllt, welcher durch Schrauben 13 an der Membranplatte 14 befestigt ist. Diese genau auf den Preßdruck abgestimmte Einspannung bewirkt gleichzeitig eine gegenseitige Abdichtung der beiden von der Membran 10 getrennten Kammerbereiche (15 + 16). Die Membran ist glatt ausgebildet. Ihre Verformung in die in Fig. 4 wiedergegebene Gestalt sorgt für eine Verminderung der maximal möglichen Zugspannungen innerhalb der Membran 10, verglichen z.B. mit einer eben parallel zur Fläche des Filters 11 gespannten Membran. Außerdem werden die Membranen im Kammerbereich von keinerlei Durchführungen z.B. für den Suspensionszulauf oder Filtratablauf unterbrochen.

Ein optimales Kuchenablöse- und -abrutschverhalten wird durch Ausbildung der Kammer durch Rezesse ausschließlich in der Membranplatte 14 erreicht, während die Oberfläche der Filterplatte 5 vollkommen eben ausgebildet ist. Zudem wird als Filter 11 ein metallisches Gewebe eingesetzt. Weiter wird die Membran 10 im Einspannungsbereich, wo sie in Rücksprüngen in der Membranplatte 14 durch die Klemmringe 6 gehalten ist, unmittelbar bevor sie in den Kammerbereich tritt, direkt und formschlüssig bis an die Filterplatte 5 herangeführt. Dadurch bieten sich im Membrankammerbereich keine über die Membran 10 herausragenden und feststehenden Hindernisse. Schließlich sind die Rezesse in der Membranplatte 14 innerhalb deren Randes 4 konisch ausgebildet und lediglich durch eine schmale Mittelwand 12 voneinander getrennt.

Die Funktion der Suspensionstemperierung wird erfüllt, indem das flüssige Druckmedium von einer Versorgungspumpe 27 jeweils auf dem zweckmäßigsten Druckniveau gehalten gleichzeitig als Wärmeträger dient. Zu diesem Zwecke kann das Druckmedium während des Betriebes mittels einer Umlaufpumpe 23 im Kreislauf gefahren werden zwischen Filterpresse und Wärmetauschern 24, 25, wahlweise zum Zwecke der Kühlung und/oder Erhitzung. Die Druckmediumskammer 16 wird dabei vom Druckmedium über Zu- und Abläufe 8 durchströmt und der Wärmeübergang zwischen Suspension und Druckmedium erfolgt zum überwiegenden Teil durch die Membran 10, welche infolge ihrer glatten Oberflächengestaltung und ihres beidseitig unmittelbaren Kontaktes mit Suspension bzw. Druckmedium einen minimalen Wärmeübertragungswiderstand bietet.

Die Funktion der thermischen Reinigung des Filtermediums wird erfüllt, indem die Membran 10 nach Entleerung der Suspensionskammer 15 direkt und formschlüssig an die Filterplatte 5 gedrückt werden kann, welche dann durch erhitztes Druckmedium aufgeheizt werden kann, beispielsweise zum Zwecke des Aufschmelzens von kristallinen Filterkuchenresten oder ähnlichen. Als Voraussetzung für den Formschluß der Membran mit der Filterplattenoberfläche ist die Membran 10 im Einspannbereich am Rande der Kammer zunächst bis an die Filterplatte 5 herangeführt. Andernfalls ließe sich der Formschluß nicht zuverlässig und ohne Gefahr der Membranzerstörung infolge von Überdehnungen in der Nähe des Einspannbereiches erreichen. Darüberhinaus ist es bei einer derartigen Reinigung von Vorteil, wenn das Filtermedium kein Filtertuch sondern ein Metallgewebe ist, da Filtertücher erfahrungsgemäß eine weit größere Neigung haben, in einem solchen Falle an der Membran haften zu bleiben, was zur Zerstörung des Filtertuches führen kann.

Die aus der Presse gewonnenen Filterkuchen 28 fallen auf ein Transportband 29, werden einem Preßkuchenbehälter 30 zugeführt, dort thermisch weiter entfeuchtet und zerkleinert und anschließend über eine Fördereinrichtung 31 siliert oder zum Versand vorbereitet.

## Patentansprüche

1. Plattenfilterpresse, die als rahmenlose Kammerfilterpresse ausgebildet ist, zur mechanischen Fest-Flüssig-Trennung von Suspensionen, zur Entölung, Entwässerung oder dergleichen mit mehreren abwechselnd hintereinander angeordneten senkrechten Filter- und Membranplatten (5, 14), die jeweils zwischen sich eine durch Auseinanderfahren der Platten (5, 14) entleerbare Filterkammer (15, 16) bestehend aus einer Druckmediums- und einer Suspensionskammer (16, 15) mit einer dazwischenliegenden undurchlässigen und flexiblen Membran (10) einschließen, wobei die Filterplatten (5) beidseitig mit einem Filter (11) belegt sind und der Abfluß zum Platteninnern erfolgt, dadurch gekennzeichnet, daß das Filter (11) in Form eines metallischen Drahtgewebes ausgeführt ist, daß die Filterplatten (5) so gestaltet sind, daß die Oberfläche der belegten Filterplatte (5) durchgehend eben ist, daß die Filter- und die Membranplatten (5, 14) sowie die Membranen (10) kreisrund ausgebildet sind, daß die Platten über unmittelbar zwischenliegende, auf den Membranplatten (14) befestigte Klemmringe (6) insgesamt miteinander verspannbar sind und daß die Membranen (10) an ihrem äußeren Rand in entsprechend geformte Rücksprünge (26) in den Membranplatten (14) eingelegt, dort durch die Klemmringe (6) dichtend gehalten und am radial inneren Rand der Klemmringe (6) bis auf die Ebene der der benachbarten Filterplatte (5) zugewandten Fläche der Klemmringe (6) geführt sind.

2. Plattenfilterpresse nach Anspruch 1, dadurch gekennzeichnet, daß die Höhe der Rücksprünge (26) so bemessen und erforderlichenfalls beispielsweise durch Beilagescheiben einstellbar ist, daß bei auf den Membranplatten (14) fest aufliegenden Klemmringen (6) deren die Rücksprünge (26) überdeckender Teil die Membranen (10) dort mit der für den Filterbetrieb günstigsten Kraft verspannt.

3. Plattenfilterpresse nach Anspruch 1 oder 2, dadurch gekennzeichnet, daß die Membranen (10) glatt, elastisch und derart vorgeformt sind, daß ihre Form der Einspannung am Rand der Membranplatte (14) entspricht und innen etwa zur halben Höhe des Abstandes zwischen Filterplatte (5) und Membranplatte (14) der dort gebildeten Filterkammern (15 + 16) einspringt.

4. Plattenfilterpresse nach Anspruch 1, 2 oder 3, dadurch gekennzeichnet, daß die Filterkammern (15 + 16) durch je zwei jeweils den benachbarten Filterplatten (5) zugewandte, durch eine Mittelwand (12) voneinander getrennte Ausnehmungen in den Membranplatten (14) gebildet sind, die sich auf ihrem Umfang zur Mittelwand (12) hin verengen.

5. Vorrichtung mit einer Plattenfilterpresse nach einem der vorhergehenden Ansprüche mit zusätzlich einer Umlaufpumpe (23), mindestens einem Wärmetauscher (24, 25) sowie einer Versorgungspumpe (27), wobei der Fluß des Druckmediums zu den Filterkammern über die Membranplatten (14) und von diesen zurück im Kreislauf über die Umlaufpumpe (23) und mindestens einen Wärmetauscher (24, 25) geführt ist, der zur Erwärmung oder Kühlung des Druckmediums und - über im wesentlichen die Membranen (10) - auch des Filtergutes dient, wobei der Druck des Druckmediums durch die außen an den Kreislauf angeschlossene Versorgungspumpe (27) auf die für den Filterbetrieb erforderlichen Drücke einstellbar ist.

6. Verwendung einer Vorrichtung nach Anspruch 5 in der Weise, daß die Druckeinstellmöglichkeit für die Versorgungspumpe (27) auch einschließt, daß jeweils nach dem Entleeren der Filterkammern und vor dem Neubeschicken der Suspensionskammern (15) die Membranen (10) durch Einleiten erhitzten Druckmediums unter geringem Druck in die Druckmediumskammern (16) formschlüssig an die Filter (11) anlegbar sind.

## Claims

1. Plate filter press constructed in the form of a frameless chamber filter press for the mechanical solid-liquid separation of suspensions, for the removal of oil, water or similar with several perpendicular filter and membrane plates (5, 14) arranged alternately one behind the other, said plates enclosing between them a filter chamber (15, 16), which may be emptied by moving the plates (5, 14) apart and comprises a pressure medium chamber and a suspension chamber (16, 15) with an impermeable and flexible membrane (10) located between them, said filter plates (5) being fitted with a filter (11) on either side, the outflow being directed towards the interior of the plates, characterised in that the filter (11) is in the form of a metal wire fabric; that the structure of the filter plates (5) is such that the surface of the covered filter plate (5) is completely even; that the filter plates and membrane plates (5, 14) as well as the membranes (10) are circular; that the plates may all be clamped together via directly interposed clamping rings (6) secured to the membrane plates (14); and that at their outer edge, the membranes (10) are inserted into correspondingly shaped recesses (26) in the membrane plates (14), are held there by the clamping rings (6) to form a seal and are guided on the radially inner edge of the clamping rings (6) up to the plane of the surface of the clamping rings (6) facing the adjacent filter plate (5).

2. Plate filter press according to Claim 1, characterised in that the height of the recesses (26) is dimensioned in such a way, and if necessary may be adjusted, for example, by shims, that, in the case where clamping rings (6) are firmly located on the membrane plates (14), the portion thereof covering the recesses (26) clamps the membranes (10) there with the most favourable force for the filter operation.

3. Plate filter press according to Claim 1 or 2, characterised in that the membranes (10) are smooth, flexible membranes and pre-shaped so that their shape corresponds to the clamping area at the edge of the membrane plate (14) and engages at about half the height of the distance between the filter plate (5) and the membrane plate (14) of the filter chambers (15 + 16) formed there.

4. Plate filter press according to Claim 1, 2 or 3, characterised in that the filter chambers (15 + 16) are each formed by two recesses in the membrane plates (14) facing the corresponding adjacent filter plates (5) and separated from one another by a central wall (12), said membrane plates narrowing on their circumference towards said central wall (12).

5. Arrangement with a plate filter press according to one of the preceding claims additionally with a circulating pump (23), at least one heat exchanger (24, 25) and a supply pump (27), wherein the flow of the pressure medium should be directed to the filter chambers via the membrane plates (14) and, from these, circulated back through the circulating pump (23) and at least one heat exchanger (24, 25) for heating or cooling the pressure medium and also - essentially via the membranes (10) - the filter material, in which case the pressure of the pressure medium may be adjusted to the pressures required for the filter operation by the supply pump (27) connected to the circuit on the outside.

6. Application of an arrangement according to Claim 5 such that the possibility of adjusting pressure for the supply pump (27) also includes positively abutting the membranes (10) against the filters (11) by feeding heated pressure medium into the pressure medium chambers (16) at a low pressure after the filter chambers are emptied and before the suspension chambers (15) are re-filled.

## Revendications

1. Filtre-presse à plaques, réalisé sous la forme d'un filtre-presse à chambres sans cadre, destiné à la séparation mécanique solide-liquide de suspensions, au déshuilage, à la déshydratation, ou similaire, comportant plusieurs plaques verticales de filtre et de membrane (5, 14) disposées alternativement les unes derrière les autres et comprenant entre chacune d'elles une chambre de filtre (15, 16) pouvant être vidée en écartant les plaques (5, 14) les uns des autres, constituée d'une chambre de fluide sous pression et d'une chambre de produit en suspension (16, 15) comportant une membrane flexible et imperméable (10) intercalée, étant entendu que les plaques de filtre sont, des deux côtés, revêtues d'un filtre (11), et que l'écoulement se fait vers l'intérieur des plaques,
caractérisé
- en ce que le filtre (11) est réalisé sous la forme d'un tissu métallique,
- en ce que les plaques de filtration (5) sont conçues de telle façon que la surface externe des plaques de filtration recouvertes soit constamment plane,
en ce que les plaques de filtre et de membranes (5, 14), ainsi que les membranes (10) sont circulaires,
- en ce que les plaques peuvent être tendues totalement les unes avec les autres au moyen de bagues de pincement (6) directement intercalées, et fixées sur les plaques de membrane (14),
- et en ce que les membranes (10) sont insérées, sur leur bord extérieur, dans des épaulements en retrait (20) ayant une forme correspondante, dans les plaques de membrane (14), maintenues étanches à cet endroit par les bagues de pincement (6), et sont guidées sur la bordure, située radialement à l'intérieur, des bagues de pincement (6) jusqu'au plan de la surface des bagues de pincement (6), tournée vers la plaque de filtre voisine (5).

2. Filtre-presse à plaques suivant la revendication 1, caractérisé en ce que la hauteur des épaulements en retrait (26) est dimensionnée, et, en cas de nécessité, réglable, par exemple au moyen de rondelles de calage, de telle façon que, dans le cas de bagues de pincement (6) reposant de façon fixe sur les plaques de membrane (14), leur partie recouvrant les épaulements en retrait (26) tend, à cet endroit, les membranes (10) avec la force la plus favorable pour le fonctionnement du filtre.

3. Filtre-presse à plaques suivant la revendication 1 ou la revendication 2, caractérisé en ce que les membranes (10) sont lisses, élastiques et préformées de telle façon que leur forme corresponde à la mise en tension sur le bord de la plaque à membrane (14) et pénètre à l'intérieur sensiblement jusqu'à la demi hauteur de la distance entre la plaque de filtre (5) et la plaque à membrane (14) des chambres de filtration (15 + 16) formées à cet endroit.

4. Filtre-presse à plaques suivant la revendication 1, la revendications 2 ou la revendication 3, caractérisé en ce que les chambres de filtration (15 + 16) sont réalisées chacune par deux évidements dans les plaques de membrane (14), ces évidements étant tournés chacun vers les plaques de filtre les plus proches (5) et séparés entre eux par une paroi médiane (12), et se rétrécissant sur leur périphérie en allant vers la paroi médiane.

5. Dispositif comportant un filtre-presse à plaques suivant l'une quelconque des revendications précédentes, comportant, en plus, une pompe de circulation (23), au moins un échangeur de chaleur (24, 25), ainsi qu'une pompe d'alimentation (27), le flux du fluide de pression étant guidé vers les chambres de filtration par les plaques à membrane (14) et renvoyées par celles-ci, dans le circuit fermé, par la pompe de circulation (23) et au moins un échangeur de chaleur (24, 25), qui sert au chauffage ou au refroidissement du fluide sous pression, et - essentiellement en passant sur les membranes (10) - également du produit à filtrer, étant entendu que la pression du fluide de pression peut être réglée sur les pressions nécessaires pour le fonctionnement du filtre, au moyen de la pompe d'alimentation (27) raccordée extérieurement au circuit fermé.

6. Utilisation d'un dispositif suivant la revendication 5 de telle façon que la possibilité de réglage de la pression pour la pompe d'alimentation (27) prévoie également qu'après chaque vidange des chambres de filtration, et avant la réalimentation des chambres de suspension (15), les membranes (10) puissent être appliquées, avec conjugaison de formes, sur les filtres (11), en introduisant du fluide de pression, réchauffé et porté à une faible pression, dans les chambres (16) du fluide de pression.
